# EUROPEAN PATENT APPLICATION

(11) **EP 1 549 021 A1**
(43) Date of publication of application: **29.06.2005**
(21) Application number: 04293092.5
(22) Date of filing: 22.12.2004
(51) Int. Cl.: H04L 29/06, G06F 1/00

(54) **Access controlled by security token and mediated by sever**

(30) Priority: 23.12.2003 US 743323
(71) Applicant: Activcard Inc., Fremont, CA 94555 (US)
(72) Inventor: Fedronic, Dominique Louis Joseph, Belmont, CA 94002 (US); Le Saint, Eric F., Los Altos, CA 94024 (US)
(74) Representative: Colas, Jean-Pierre

(57) **Abstract**

A method, system and computer program product for accessing one or more security token resources (75) using an authentication server (110) as an intermediary before access is permitted to the security token resources. The server intermediary performs an initial authentication based on a user supplied critical security parameter. To ensure confidentiality of transported critical security parameters, a secure messaging session is established which provides end-to-end security between the authentication server (110) and the security token (75). A second critical security parameter is then sent to the security token. The security token authenticates the second critical security parameter and allows access token resources. Alternate secure communications mechanisms and an invalid entry counter reset capability are also described.

## Description

### FIELD OF INVENTION

The present invention relates generally to a data processing method, system and computer program product and more specifically to a method, system and computer program product for accessing a security token using a server intermediary.

### BACKGROUND

A typical computer user may have a number of usemames and passwords combinations that have to be memorized in order to gain access to each specific service. By storing the usernames and passwords in a security token, the user only needs to remember a personal identification number or PIN. Furthermore, by adding biometrics to the authentication process, the PIN entry procedure may be substituted with a biometric scan which further minimizes the memorization requirements placed on the user.

However, due to the limited storage space and processing power available in the current generation of security tokens, susceptibility to distortions introduced into the biometric sample from a new scar, cut, bum, dirt, skewed sample image, aging, physiological changes, degraded scanner membrane, etc. is increased, resulting in higher false rejection rates than would be obtained using the greater processing capabilities available on a client/server based biometric authentication system.

Likewise, a faulty user interface device such as damaged keyboard, a forgotten PIN or corrupted application or data files on a host client may also prevent the user from accessing security token resources since many security tokens include a maximum number of invalid entries before locking the security token. Repeated invalid entries (either traditional PIN or biometric) are counted toward the lockout and once the invalid entry counter limit has been exceeded, the security token requires a counter reset before allowing additional access attempts.

In a typical enterprise operating environment, a user who is unable to gain access to his or her security token generally seeks the assistance of an IT support desk. As a temporary solution, the support desk may establish a guest account for the user which has limited capabilities and does not provide access to the information and resources available in the security token. Alternately, the user may be provided with a new security token which reestablishes some functionality but still does allow access to resources and data only available from the original security token.

Furthermore, the user may not be able to contact the support staff during non-working hours (e.g., nights, weekends and holidays) or during traditionally heavy demand periods (e.g., Monday mornings, following a system interruption, migration to another operating system or software application, etc.)

A number of solutions have been proposed to address many of these issues. The following US patent applications can be referred to.

US patent application 2004-0034784 (serial number 10/218,665) describes a secure mechanism which allows a user's personal identification number (PIN) associated with a smart card to operate independently from a biometric authentication system. This improvement reduces the administrative burden of having to keep a user's PIN synchronized with the PIN used to access the user's smart card following successful biometric authentication.

US patent application 20040034783 (serial number 10/218,640) describes a system and method for sequentially processing a biometric sample received from a biometric scanner, initially processing the sample using a security token and a first attempt at verifying the processed sample against a stored biometric template. In the event of a degraded biometric sample or other factor which causes the initial verification attempt by the security token to fail, the biometric sample and a first set of biometric processing parameters including a unique identifier associated with the security token, a biometric algorithm descriptor and the biometric template are securely sent to a more powerful stateless server for additional processing of the biometric sample and a second verification attempt.

US patent application 2004-0103324 (serial number 10/304,95) describes a mechanism product which allows a user to self controlled security token administration.

US patent application 2004-0123152 (serial number 10/402,960) and US patent application 2004-0221174 (serial number 10/425,028) describe security arrangements which includes access control rules and associated authentication states for at least controlling access to one or more security tokens.

Lastly, US patent application 2004-0103325 (serial number 10/305,179) describes a simple mechanism to unblock a security token without having to physically identify the end user or require the assistance of a third party and includes end-to-end security is maintained throughout the PIN reset process using existing cryptographic and administrative mechanisms.

Therefore, a server mediated security token access mechanism which incorporates elements of the aforementioned non-prior art patent applications and further incorporates various secure messaging arrangements would be highly advantageous for enterprise level security token management.

### SUMMARY

This invention addresses the limitations described above and provides a mechanism for accessing one or more security token resources using an authentication server to authenticate a user or entity's critical security parameter before access is permitted to the security token resources.

The term "security token" as described herein includes hardware based security devices such as cryptographic modules, smart cards, integrated circuit chip cards, portable data carriers (PDC), personal security devices (security token), subscriber identification modules (SIM), wireless identification modules (WIM), USB token dongles, identification tokens, secure application modules (SAM), hardware security modules (HSM), secure multi-media token (SMMC), trusted platform computing alliance chips (TPCA) and like devices.

The term critical security parameter (CSP) is adopted from the US National Institute of Standards and Technology (NIST) as specified in FIPS PUB 140-2, "Security Requirements For Cryptographic Modules," and includes authentication data, passwords, personal identification numbers (PINs), biometric samples, biometric templates, secret and private cryptographic keys, passphrases, one or more results of cryptographic operations used to authenticate a user or entity (e.g., challenge/response), or a security state associated with a security policy.

The method portion of the invention includes the major steps of exchanging one or more critical security parameters between a security token enabled client, a security token operatively coupled to the security token enabled client and an authentication server; performing a plurality of authentication transactions between at least the security token and the authentication server using one or more of the critical security parameters and allowing a user access to one or more security token resources following successful completion of the plurality of authentication transactions. This method is intended to be implemented when the security token is generally unavailable to the user due to implementation of a security policy or a processing limitation (e.g., poor quality biometric sample.)

Additional steps are provided for generating by either the security token or the security token enabled client, an access request which incorporates a unique identifier associated with the security token, sending the access request to the authentication server, and obtaining a critical security parameter associated with the unique identifier. The critical security parameter is a member of the one or more critical security parameters.

Lastly, additional steps are provided for establishing a secure messaging session between the authentication server and at least the security token and resetting an invalid entry counter associated with the security token following authentication of the second critical security parameter.

The system portion of the invention includes a security token enabled client computer system in processing communications with an authentication server. The processing communications may include a secure messaging protocol between the security token enabled client computer system and the authentication server comprising secure socket layer (SSL), transport layer security (TLS) or internet protocol security IPsec. One skilled in the art will appreciate that other secure messaging protocols may be employed as well.

The security token enabled client includes an operatively coupled security token, input devices such as a biometric scanner, keyboard, mouse or touch sensitive screen for allowing a user to enter a first critical security parameter. The security token enabled client further includes a client processor, memory operatively coupled to the client processor and a client application operatively stored in at least a portion of the memory.

The client application provides logical instructions executable by the client processor to: receive the first critical security parameter provided by the user, generate an access request which incorporates a unique identifier associated with the security token, send the access request and the first critical security parameter to an authentication server and route communications between the authentication server and the security token as an electrical power and communications interface for the security token.

In an alternate embodiment of the invention, the security token enabled client may also include a pipe client application operatively installed in another portion of the memory which provides logical instructions executable by the client processor to encapsulate APDU responses generated by the security token into one or more communications packets and extract APDU commands encapsulated in the one or communications packets sent from the authentication server. In the final embodiment of the invention, the client application includes the ability to receive a biometric sample provided by the user as the first critical security parameter which is then sent to the authentication server for processing.

The authentication server includes a server processor, memory operatively coupled to the server processor and a server application operatively stored in at least a portion of the memory. The server application provides logical instructions executable by the server processor to authenticate the user via the received first critical security parameter, obtain a second critical security parameter specific to the security token via the unique identifier included in the access request and send the second critical security parameter to the security token.

The authentication server further includes the ability to generate and securely share a set of session keys with the security token as part of a secure messaging session. In an alternate embodiment of the invention, the authentication server may also include a pipe server application operatively installed in another portion of the memory which provides logical instructions executable by the server processor to generate APDU commands, encapsulate the APDU commands in one or more communications packets and extract APDU responses encapsulated in the one or communications packets received from the security token. The APDU pipe arrangement may used with or without the secure messaging arrangement.

In yet another embodiment of the invention, the authentication server further includes the ability to send a reset APDU command following authentication of the second critical security parameter to reset an invalid entry counter associated with the security token.

In final embodiment of the invention, the server application includes the ability to receive a biometric sample sent from the security token enabled client as the first critical security parameter, process the biometric sample, generate a biometric sample template and either match the biometric sample template against a reference biometric template and return a cryptographic result to the security token as second critical security parameter or return the biometric sample template to the security token for matching as the second critical security parameter.

The security token includes a token processor, memory operatively coupled to the token processor and a security executive application operatively stored in at least a portion of the memory. The security executive application provides logical instructions executable by the token processor to authenticate the second critical security parameter and allow access to one or more security token resources following authentication of the second critical security parameter. The security token in conjunction with the authentication server includes the ability to establish a secure messaging session between using a shared set of session keys. The security token further includes the ability to generate and assign session identifiers to the shared set of session keys. In an alternate embodiment of the invention, the security executive application includes the ability to perform biometric template matching.

The computer program product portion of the invention includes programs and associated data recorded on optical, magnetic or logical transportable digital recording media such as a CD ROM, floppy disk, data tape, DVD, flash RAM or removable hard disk for installation on the security token enabled client, authentication server and/or security token. The programs and associated data may be stored on the transportable digital recording media in a code format including compiled, interpreted, compilable and interpretable.

### BRIEF DESCRIPTION OF DRAWINGS

The features and advantages of the invention will become apparent from the following detailed description when considered in conjunction with the accompanying drawings. Where possible, the same reference numerals and characters are used to denote like features, elements, components or portions of the invention. Optional components are generally shown in dashed lines. It is intended that changes and modifications can be made to the described embodiment without departing from the true scope and spirit of the subject invention as defined in the claims.
FIG. 1 - is a generalized block diagram of a security token enabled client and a functionally connected security token.
FIG. 2 - is a detailed block diagram of the invention including applicable system components and devices.
FIG. 2A - is a detailed block diagram of a user providing a first critical security parameter to the security token enabled client.
FIG. 2B - is a detailed block diagram of a first embodiment of the invention where an authentication server receives the first critical security parameter, performs an authentication and returns a second critical security parameter which is processed by a security token.
FIG. 2C - is a detailed block diagram of an alternate embodiment of the invention where an APDU communications pipe is included in the authentication transaction.
FIG. 2D - is a detailed block diagram of an alternate embodiment of the invention where the requirements of one or more security policies need to be fulfilled before access is allowed to security token resources.
FIG. 2E - is a detailed block diagram of the alternate embodiment of the invention where the requirements of one or more security policies are fulfilled which allows access to security token resources
FIG. 3 - is a flow diagram illustrating the major steps associated with implementing the invention.

### DETAILED DESCRIPTION

This present invention provides a mechanism for accessing one or more security token resources using an authentication server as an intermediary before access is permitted to the security token resources. The applications are envisioned to be programmed in a high level language such as Java ™, C++, C or Visual Basic ™.

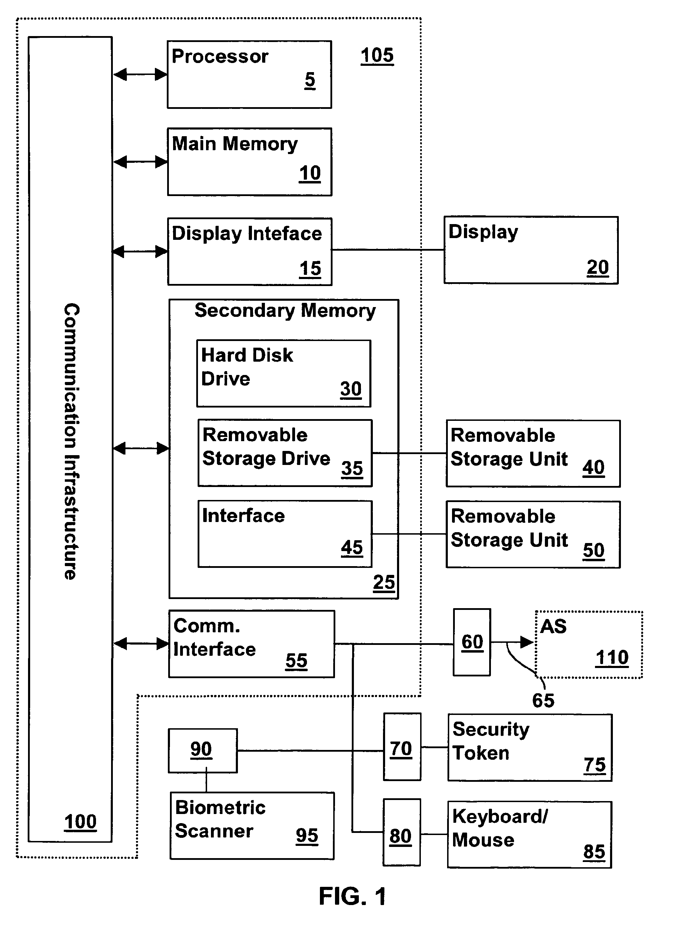

Referring to Figure 1, a functional block diagram of the security token enabled client is shown which includes a central processor 5, a main memory 10, a display 20 (including touch sensitive) electrically coupled to a display interface 15, a secondary memory subsystem 25 electrically coupled to a hard disk drive 30, a removable storage drive 35 electrically coupled to a removable storage unit 40 and an auxiliary removable storage interface 45 electrically coupled to an auxiliary removable storage unit 50.

A communications interface 55 subsystem is coupled to a network 65 via a network interface 60. The network 65 includes standard wired, optical or wireless networks which incorporates a secure communications protocol comprising secure socket layer (SSL), transport layer security (TLS) or internet protocol security (IPsec.)

A security token ST[ID] 75 is operably coupled to the communications interface 55 via a security token interface 70. User input devices such as a mouse and a keyboard 85 are operatively coupled to the communications interface 55 via a user interface 80. Lastly, a biometric scanner is operatively coupled to the communications interface 55 via a biometric scanner interface 90.

The central processor 5, main memory 10, display interface 15 secondary memory subsystem 25 and communications interface system 55 are electrically coupled to a communications infrastructure 100. The security token enabled client CS 105 includes an operating system, a client application, a security token application programming interface, one or more security token aware applications, cryptography software capable of performing symmetric and asymmetric cryptographic functions, secure messaging software and all necessary device interface and driver software. The client application includes the abilities to receive a first critical security parameter provided by a user via either the keyboard/mouse 85, biometric scanner 95 or touch sensitive display 20, generate an access request which incorporates a unique identifier associated with the security token ST[ID] 75, send the access request and the first critical security parameter to an authentication server over the network 65and route communications to/from the security token 75 to the authentication server 110 connected to the network 65 as an electrical power and communications interface for the security token.

The security token ST[ID] 75 includes an wireless, optical and/or electrical connection means compatible with the security token interface 70, a microprocessor, a cryptography co-processor, volatile and non-volatile memory electrically coupled to the processor and co-processor, a runtime operating environment, cryptography extensions available to the runtime environment and capable of performing symmetric and asymmetric cryptographic functions compatible with the security token enabled client and authentication server's cryptography software, a security executive application and one or more security token resources. Additional applications may be installed to facilitate the various embodiments of the invention including biometric processing and matching algorithms.

The security executive application includes the abilities to authenticate a second critical security parameter and allow access to the one or more security token resources following authentication of the second critical security parameter. The security token ST[ID] 75 in conjunction with the authentication server 110 further includes the abilities to establish a secure messaging session between using a shared set of session keys and to generate and assign session identifiers to the shared set of session keys. Additional applications may be installed to facilitate the various embodiments of the invention including biometric processing and matching algorithms.

The authentication server AS 110 incorporates essentially the same functional components as those described above for the security token enabled client 105. The authentication server AS 110 includes a server application having the abilities to authenticate the user via the received first critical security parameter sent from the security token enabled client CS 105, obtain a second critical security parameter specific to the security token via the unique identifier included in the access request and send the second critical security parameter to the security token ST[ID] 75.

The server application further includes the abilities to generate and securely share the set of session keys with the security token ST[ID] 75 as part of a secure messaging session. Additional applications may be installed to facilitate the various embodiments of the invention including biometric processing and matching algorithms.

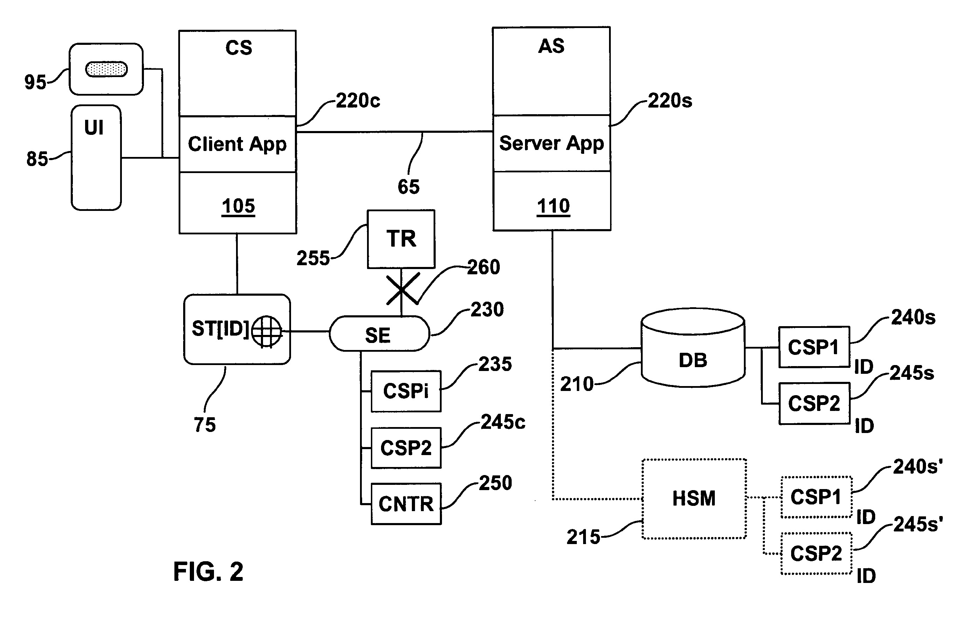

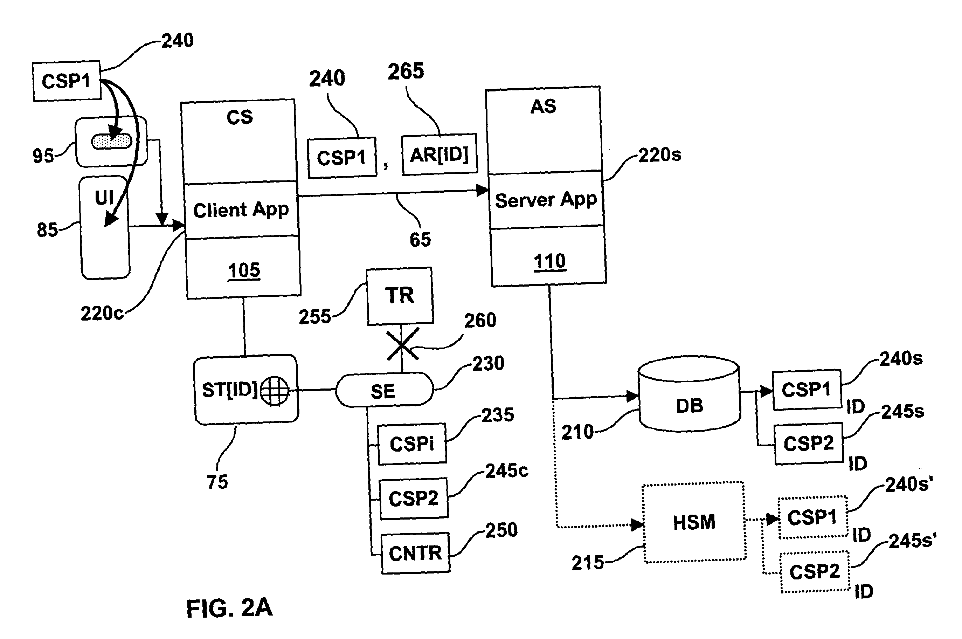

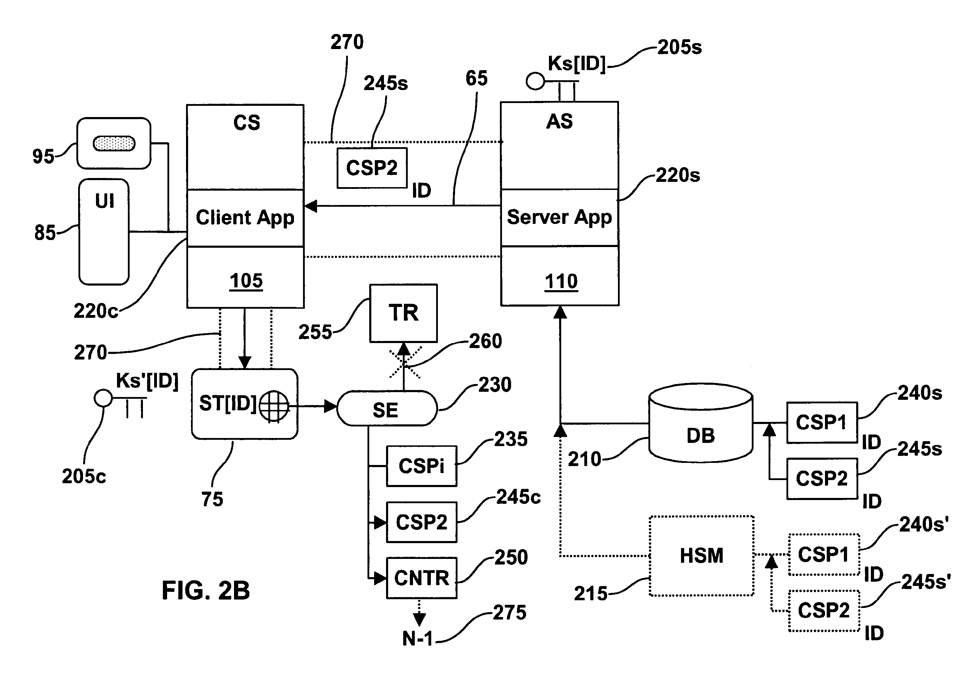

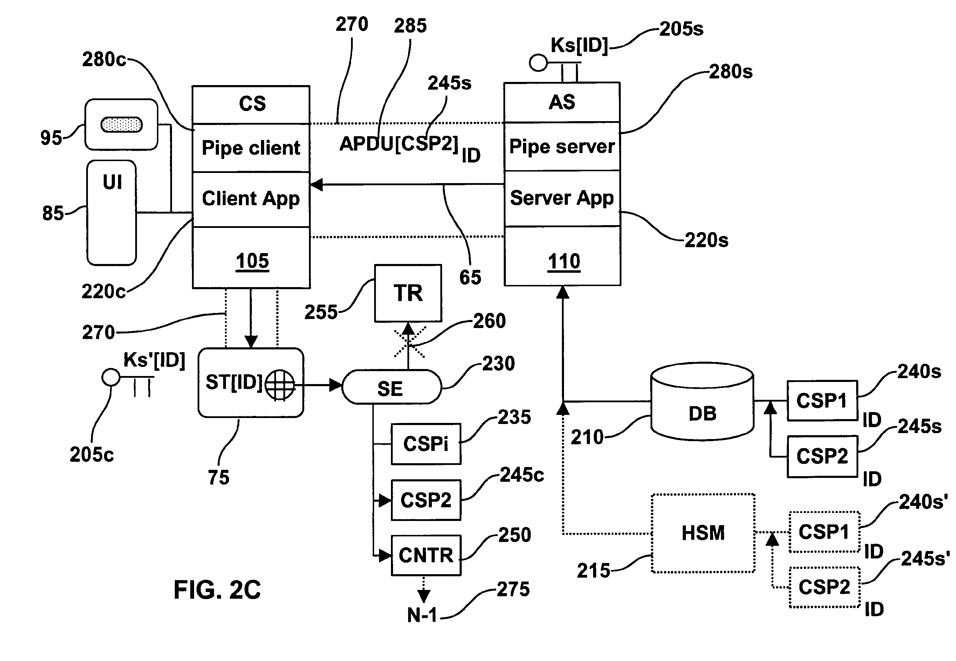

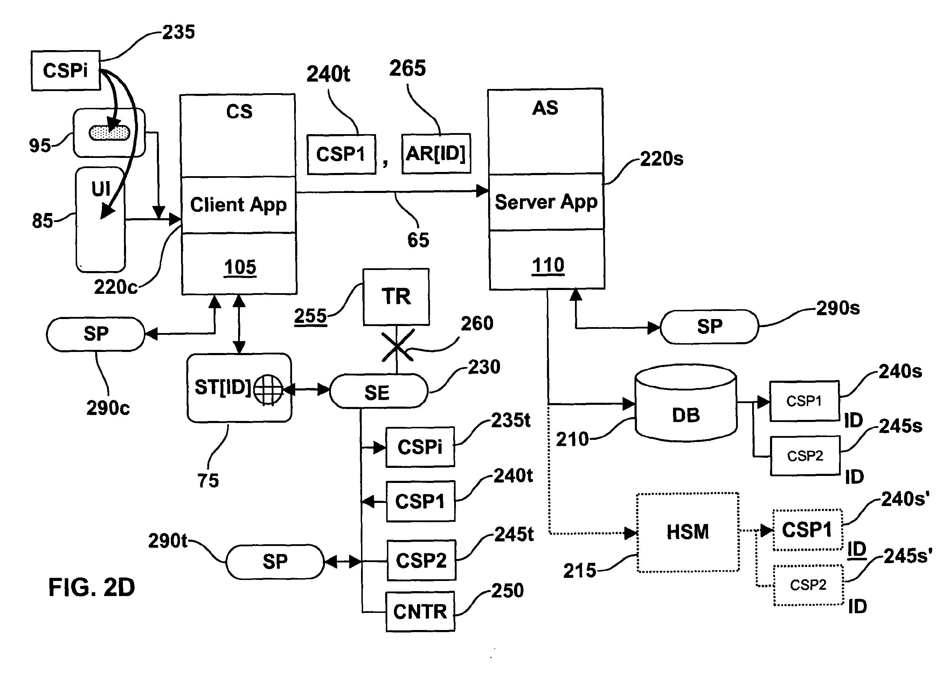

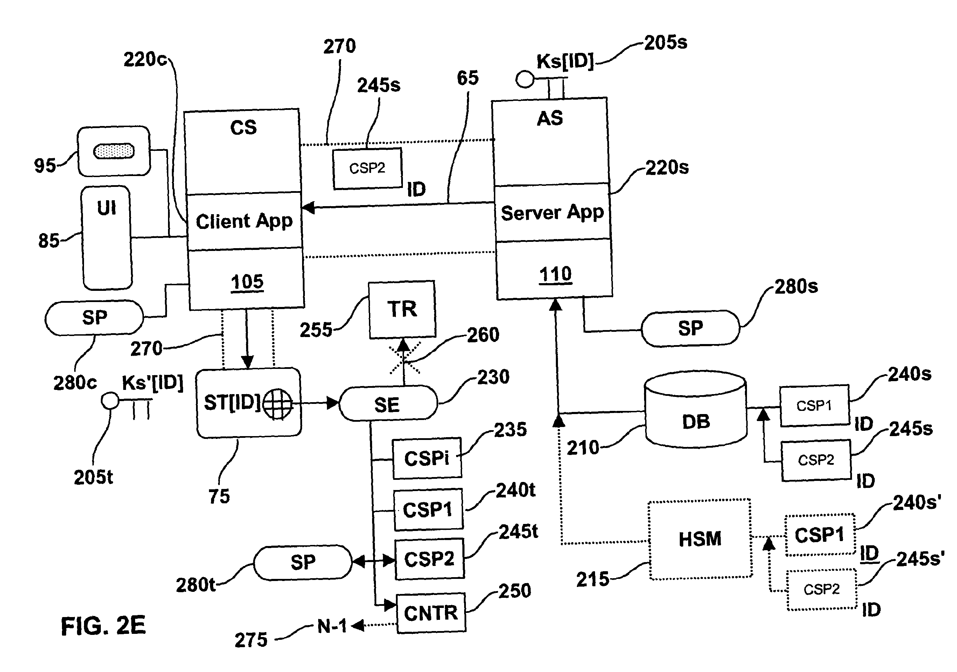

Referring to Figure 2, a basic embodiment of the invention is shown. The client computer CS 105 is in processing communications with an authentication server AS 110 over a network 65. The client computer CS 105 includes a client application Client App 220c, a user interface 85, a biometric scanner 95 and a functionally coupled security token ST[ID] 75. The security token ST[ID] 75 includes a security executive application 230 which restricts 260 access to one or more security token resources TR 255 until properly authenticated with a critical security parameter CSPi 235, CSP2 245t.

The critical security parameters include authentication data, passwords, personal identification numbers (PINs), biometric samples, biometric templates, secret and private cryptographic keys, passphrases and one or more results of cryptographic operations used to authenticate a user or entity. Cryptographic operations include challenge/response, transfer or change of one or more security states, biometric sample processing and biometric template generation.

The authentication server AS 110 includes a server application Server App 220s and online database storage DB 210 which includes retrievable critical security parameters CSP1 240s, CSP2 245s associated with the security token ST [ID] 75. An alternate secure online storage such as a hardware security module HSM 215 may be used in conjunction with, or a replacement for the online database storage DB 210.

In one embodiment of the invention, the critical security parameters CSP1 240s, CSP2 245s are cross-referenced using a unique serial number masked into nonvolatile ROM of the security token ST [ID] 75 at time of manufacture. In an alternate embodiment of the invention, critical security parameters CSP1 240s, CSP2 245s is cross-referenced using a unique user identifier (USERID). One skilled in the art will appreciate that any unique identifier which associates the stored critical security parameters CSP1 240s, CSP2 245s with the security token ST [ID] 75 will function equally as well. An equivalent retrieval mechanism for retrieving the critical security parameters CSP1 240s', CSP2 245s' may be employed for the hardware security module HSM 215 embodiment of the invention.

Referring to Figure 2A, a user enters a first critical security parameter CSP1 240 in either or both the user interface UI 85 and/or biometric scanner 95. The utility application Client App 220c receives the first critical security parameter CSP1 240 and generates an access request AR 265 which includes the unique identifier associated with the security token ST [ID] 75. The access request AR 265 is sent over the network 65 to the authentication server AS 110, followed by the critical security parameter CSP1 240. Receipt of the access request AR 265 by the authentication server AS 110 causes a secure messaging session to be established between the security token enabled client CS 105 and the authentication server AS 110 prior to transmission of the first critical security parameter CSP1 240 if not previously established. Examples of acceptable secure messaging protocols include secure socket layer (SSL), transport layer security (TLS) or internet protocol security (IPsec.)

The authentication server AS 110 retrieves a reference critical security parameter CSP1 240s, 240s' using the unique identifier associated with the security token ST [ID] 75 from the online database DB 210 or hardware security module HSM 215 and authenticates the received critical security parameter CSP1 240. If the received critical security parameter CSP1 240 does not match the reference critical security parameter CSP1 240s, 240s' processing is terminated and the user is denied access.

In an alternate embodiment of the invention, where the first critical security parameter CSP1 240 is a biometric sample, the server application Server App 220s includes the ability to process the received biometric sample, generate a biometric sample template and either match the biometric sample template directly against a reference biometric template retrievably stored as a reference critical security parameter CSP1 240s, 240s' then return a cryptographic result to the security token ST [ID] 75 as a second critical security parameter, or return the biometric sample template to the security token ST [ID] 75 for matching as the second critical security parameter.

Referring to Figure 2B, if the received critical security parameter CSP1 240 does match the reference critical security parameter CSP1240s, 240s', an end to end secure messaging session is established between the authentication server AS 110 and the security token ST [ID] 75. This secure messaging session incorporates a set of shared symmetric session keys Ks[ID] 205s, Ks'[ID] 205t having a unique identifier assigned by the security token ST [ID] 75. The mechanism for generating the shared symmetric session keys is described in co-pending US patent application 2004-0218762 (serial number 10/424,783) to which it can be referred.

Once the secure messaging session is established, a second critical security parameter CSP2 245s, 245s' is retrieved from the online database DB 210 or hardware security module HSM 215 and sent to the security token ST [ID] 75 for authentication by the security executive application SE 230. If the received critical security parameter CSP2 245s, 245s' does not match the token's reference critical security parameter CSP2 245t processing is terminated and the user is denied access to the security token resources TR 255.

If the received critical security parameter CSP2 245s, 245s' does match the token's reference critical security parameter CSP2 245t the restriction 260 is removed and the user is allowed access to the security token resources TR 255. In an additional embodiment of the invention, a command may be sent from the authentication server AS 110 to the security token ST [ID] 75 to reset an invalid entry counter 215 which at least decrements 275 the counter by one to allow the user to directly access the security token ST [ID] 75 and security token resources TR 255.

Referring to Figure 2C, an alternate authentication embodiment of the invention is shown which incorporates an APDU communications pipe. The authentication server AS 110 includes a second application called a pipe server 280s with a counterpart pipe client 280c application installed on the security token equipped client CS 105. The pipe server 280s generates and encapsulates native ISO 7816 APDU commands and data into network protocol communication packets (e.g., TCP/IP) which are sent 285 to the pipe client 280c. The pipe client 280c extracts the APDU commands which are then routed to the security token ST [ID] 75 for processing.

APDU responses and data generated by the security token ST [ID] 75 are encapsulated by the pipe client 280c into the network protocol communications packets and sent to the pipe server 280s for extraction of the APDU responses and data, and conversion into a form usable by applications installed on the authentication server AS 110. The APDU communications pipe may be used with or without the shared symmetric key messaging session.

The APDU communications pipe arrangement is described in US patent application 2002-0162021 (serial no. 09/844,246) to which it can be referred. Other aspects of the invention are equivalent to those previously described above under the discussion for FIG 2B.

Referring to Figure 2D, an alternate authentication embodiment of the invention is shown where one or more security policies need to be authenticated in order to allow access to security token resources. In this embodiment of the invention, a user enters his or her critical security parameter CSPi 235 into a user interface UI 85 and/or biometric scanner 95 as before. However, in this embodiment of the invention, the entered critical security parameter CSPi 235 may first be authenticated by the security token ST[ID] 75 by comparison with a reference critical security parameter CSPi 235t. In addition, one or more pre-established security policies SP 290t on the security token ST[ID] 75, security token enabled client CS 105 SP 290c and/or authentication server AS 110 SP 290s are verified before allowing access 260 to security token resources 255.

In this embodiment of the invention, the exchanged critical security parameters CSP1 240t, CSP1 240s, CSP1 240s' correspond to security states or security policy requirements as described in US patent applications 2004-0123152 (serial number 10/402,960) and US patent application 2004-0221174 (serial number 10/425,028) to both of which it can be referred. The security policies SP 290t, SP 290c, SP 290s and/or associated security states may require for example, that a particular security token enabled client CS 105 and/or authentication server AS 110 be utilized before allowing access to the security token ST[ID] 75. Example security states associated with the security policies may require completion of a two factor authentication process between the security token ST[ID] 75 and the authentication server AS 110, establishment of the secure messaging session 270 and/or user authentication to the security token ST[ID] 75 with a particular PIN, biometric sample or both.

Referring to FIG. 2E, once confirmation of the required security states and/or security policies have been authenticated by the security token ST[ID] 75, access 260 to security token resources TR 255 is permitted. Other aspects of the invention such as the secure messaging session 270 are equivalent to those previously described.

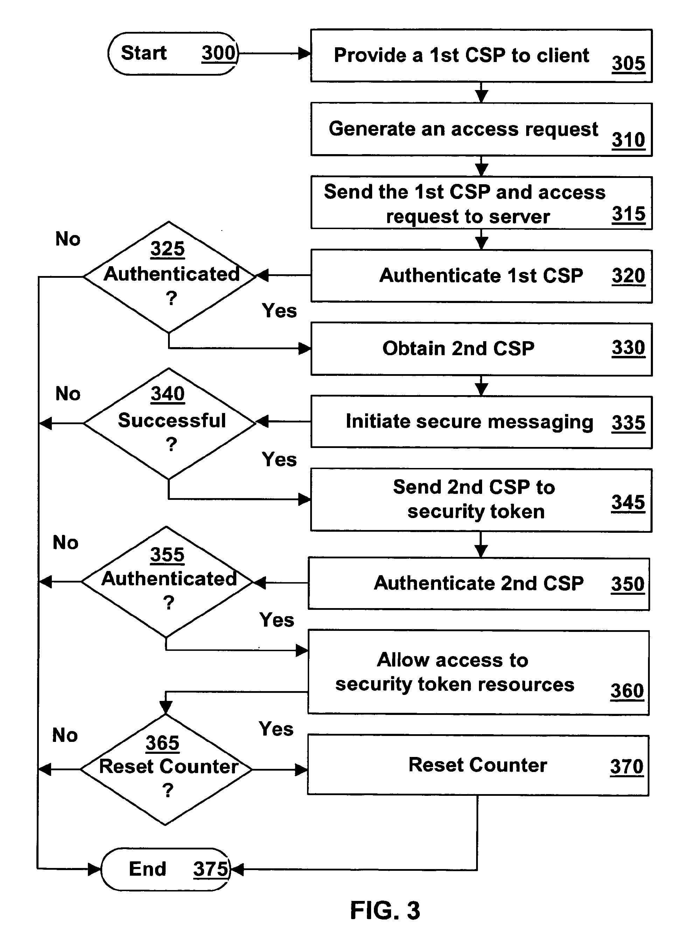

Lastly, referring to Figure 3, the major steps for implementing authentication server mediated access to security token are provided. The process is initiated 300 by providing a critical security parameter to a security token enabled client 305. A client application generates an access request which incorporates a unique identifier associated with the security token 310.

The access request is then sent to an authentication server 315. The receipt of the access request causes the authentication server to initiate a secure messaging session 320. If the secure messaging session is not successfully established 325, processing ends 380 and the user is denied access to security token resources. If the secure messaging session is successfully established 325, a critical security parameter is sent from either the security token or security token enabled client to the authentication server 330.

The authentication server using the unique identifier as cross reference or index retrieves a reference critical security parameter counterpart and attempts to authenticate the received critical security parameter 335. If the received critical security parameter is not authenticated 340, processing ends 380 and the user is again denied access to security token resources.

If the received critical security parameter is authenticated 340, a second critical security parameter is obtained 345 and is sent to the security token for authentication 350 where the security token attempts to authenticate the second critical security parameter 355.

If the second critical security parameter is not authenticated by the security token 360, processing again ends 380 and the user is denied access to the security token resources. If the second critical security parameter is authenticated by the security token 360, the security token allows access to security token resources 365.

If an invalid entry counter needs to be reset 370, a command is sent from the authentication server to the security token which resets the counter 375. If the invalid entry counter does not need to be reset 370, processing ends normally 380 following completion of the user's session.

The foregoing described embodiments of the invention are provided as illustrations and descriptions. They are not intended to limit the invention to precise form described. In particular, it is contemplated that functional implementation of the invention described herein may be implemented equivalently in hardware, software, firmware, and/or other available functional components or building blocks. No specific limitation is intended to a particular cryptographic module operating environment. Other variations and embodiments are possible in light of above teachings, and it is not intended that this Detailed Description limit the scope of invention, but rather by the Claims following herein.

## Claims

1. A server mediated security token access method comprising the steps of:
a. exchanging one or more critical security parameters between a security token enabled client, a security token operatively coupled to said security token enabled client and an authentication server, wherein said security token is generally unavailable to a user due to implementation of a security policy or a processing limitation,
b. performing a plurality of authentication transactions between at least said security token and said authentication server using said one or more critical security parameters, and
c. allowing said user access to one or more security token resources following successful completion of said plurality of authentication transactions.

2. The method according to claim 1 wherein step 1.a further includes the steps of;
a. generating by either said security token or said security token enabled client, an access request which incorporates a unique identifier associated with said security token,
b. sending said access request to said authentication server, and
c. obtaining a critical security parameter associated with said unique identifier, wherein said critical security parameter is a member of said one or more critical security parameters.

3. The method according to claim 1 wherein said one or more critical security parameters is selected from the group consisting of a passphrase, a cryptographic key, biometric data, a password, a security state associated with said security policy and a result of a cryptographic operation.

4. The method according to claim 1 further including the step of establishing a secure messaging session between said authentication server and at least said security token.

5. The method according to claim 1 further including the step of resetting an invalid entry counter associated with said security token following successful completion of said plurality of authentication transactions.

6. The method according to claim 4 wherein said secure messaging session incorporates a set of session keys generated by said authentication server and shared with said security token.

7. The method according to claim 4 wherein said secure messaging session incorporates an APDU communications pipe.

8. The method according to claim 4 wherein said secure messaging session includes SSL, IPsec or TLS.

9. The method according to claim 3 wherein said biometric data is sent from said security token enabled client to said authentication server, processed by said authentication server and returned to said security token as a member of said one or more critical security parameters.

10. The method according to claim 3 wherein said biometric data is sent from said security token enabled client to said authentication server, processed by said authentication server, matched against a reference biometric template and a cryptographic result returned to said security token as a member of said one or more critical security parameters.

11. A server mediated security token access system comprising:
a security token enabled client in processing communications with an authentication server and an operatively coupled security token, wherein said security token enabled client includes means for;
• receiving a first critical security parameter from a user,
• exchanging a plurality of critical security parameters between said security token and said authentication server, wherein said first critical security parameter is a member of said plurality of critical security parameters,
• generating an access request which incorporates a unique identifier associated with said security token,
• sending an access request and at least one member of said plurality of critical security parameters to said authentication server, and
said authentication server including means for;
• authenticating said user via at least said at least one member,
• obtaining a second critical security parameter having an association with said security token, wherein said second critical security parameter is also a member of said plurality of critical security parameters, and
• sending said second critical security parameter to said security token;
said security token including means for;
• authenticating said second critical security parameter, and
• allowing access to one or more security token resources following successful authentication of said second critical security parameter.

12. The system according to claim 11 wherein said authentication server further includes means for generating and sharing a set of session keys with said security token.

13. The system according to claim 11 wherein said processing communications includes SSL, IPsec or TLS.

14. The system according to claim 12 wherein said authentication server and said security token further includes means for establishing a secure messaging session between said authentication server and said security token using said set of session keys.

15. The system according to claim 12 wherein said security token further includes means for generating and assigning session identifiers to said set of session keys.

16. The system according to claim 11 wherein said plurality of critical security parameters is selected from the group consisting of a passphrase, a cryptographic key, biometric data, a password, a security state associated with a security policy and a result of a cryptographic operation.

17. The system according to claim 11 wherein said authentication server further includes means for;
• processing a biometric sample sent from said security token enabled client as said first critical security parameter,
• generating a sample biometric template,
• matching said sample biometric template against a reference biometric template and returning a cryptographic result to said security token as said second critical security parameter, or
• sending said sample biometric template to said security token as said second critical security parameter.

18. The system according to claim 11 wherein said authentication server further includes means for resetting an invalid entry counter associated with said security token following authentication of said second critical security parameter.

19. The system according to claim 11 wherein said security token is generally unavailable to said user due to implementation of a security policy or a processing limitation.

20. The system according to claim 16 wherein said security policy is associated with at least said security token, said security token enabled computer system or said authentication server.

21. A server mediated security token access system comprising:
a security token enabled client in processing communications with an authentication server and an operatively coupled security token including;
a user input means;
a first processor;
a first memory operatively coupled to said first processor;
a client application operatively stored in at least a portion of said first memory having logical instructions executable by said first processor to;
receive a first critical security parameter from said user input means,
exchange a plurality of critical security parameters between said security token and said authentication server, wherein said first critical security parameter is a member of said plurality of critical security parameters,
generate an access request which incorporates a unique identifier associated with said security token, and
send said access request to said authentication server;
said authentication server including;
a second processor;
a second memory operatively coupled to said second processor;
a server application operatively stored in at least a portion of said second memory having logical instructions executable by said second processor to;
authenticate a user via said first critical security parameter, obtain a second critical security parameter associated with said security token via said unique identifier, wherein said second critical security parameter is also a member of said plurality of critical security parameters, and
send said second critical security parameter to said security token; and
said security token including;
a third processor;
a third memory operatively coupled to said third processor;
a security executive application operatively stored in at least a portion of said third memory having logical instructions executable by said third processor to;
authenticate said second critical security parameter, and
allow access to one or more security token resources following successful authentication of said second critical security parameter;
wherein said security token is generally unavailable to said user due to implementation of a security policy or a processing limitation.

22. The system according to claim 21 wherein said authentication server further includes a pipe server application operatively installed in another portion of said second memory having logical instructions executable by said second processor to;
generate APDU commands,
encapsulate said APDU commands in one or more communications packets, and
extract APDU responses encapsulated in said one or communications packets.

23. The system according to claim 22 wherein said security token enabled client further includes a pipe client application operatively installed in another portion of said first memory having logical instructions executable by said first processor to;
encapsulate said APDU responses in one or more communications packets, and
extract said APDU commands encapsulated in said one or communications packets.

24. The system according to claims 21 wherein said plurality of critical security parameters is selected from the group consisting of a passphrase, a cryptographic key, biometric data, a password, a security state associated with a security policy and a result of a cryptographic operation.

25. The system according to claim 21 wherein said client application further includes logical instructions executable by said first processor to receive a biometric sample from said user and send said biometric sample to said authentication server as said first critical security parameter.

26. The system according to claim 21 wherein said server application authentication further includes logical instructions executable by said second processor to;
• process a biometric sample sent from said security token enabled client as said first critical security parameter,
• generate a sample biometric template,
• match said sample biometric template against a reference biometric template and return a cryptographic result to said security token as said second critical security parameter, or
• send said sample biometric template to said security token as said second critical security parameter.

27. The system according to claim 21 wherein said processing communications includes SSL, IPsec or TLS.

28. The system according to claim 21 wherein said processing communications includes a set of session keys generated by said authentication server and shared with said security token.

29. A computer program product embodied in a tangible form readable by a plurality of processors in processing communications, wherein said computer program product includes executable instructions stored thereon for causing one or more of said plurality of processors to;
a. exchange a plurality of critical security parameters between a first processor, a second processor and a third processor,
b. authenticate a first member of said plurality of critical security parameters received by said second processor,
c. send a second member of said plurality of critical security parameters to said third processor following authentication of said first member of said plurality of critical security parameters by said second processor,
d. authenticate said second member of said plurality of critical security parameters by said third processor, and
e. allow access to a memory coupled to said third processor following successful authentication of said second member of said plurality of critical security parameters.

30. The computer program product according to claim 28 wherein said tangible form includes magnetic media, optical media or logical media.

31. The computer program product according to claim 28 wherein said executable instructions are stored in a code format selected from the group consisting of compiled, interpreted, compilable and interpretable.
